# EUROPEAN PATENT APPLICATION

(11) **EP 1 013 493 A2**
(43) Date of publication of application: **28.06.2000**
(21) Application number: 99124395.7
(22) Date of filing: 07.12.1999
(51) Int. Cl.: B60J 3/00

(54) **Sunshading film for adhering onto a window pane of a motor vehicle and manufacturing method therefor**

(30) Priority: 07.12.1998 DE 29821759 U
(71) Applicant: Knoch, Marcus-Marcel, 82380 Peissenberg (DE)
(72) Inventor: Knoch, Marcus-Marcel, 82380 Peissenberg (DE)
(74) Representative: Glawe, Delfs, Moll & Partner

(57) **Abstract**

Sunshading film for adhering to a curved window of a motor vehicle and capable of being rolled up. The film, when cut, is non-rectangular and corresponds to the shape of the window to which it is to be applied. A method of mixing the film is also disclosed.

## Description

### BACKGROUND OF THE INVENTION

Sunshading films for tinting motor vehicle glass panes are currently being offered for sale in specialty stores, as a rule, in rectangular cuttings of varying sizes. It is necessary for the customer to cut to size the sunshading film himself depending on the particular window pane sizes of his motor vehicle. This is particularly difficult in the case of the rear window, difficult for the reason that most rear windows are three-dimensionally curved or domed. The folds generated by necessity when placing the flat film in position can only be eliminated through incisions, preferably parallel to the heating wires. Depending on the degree of curvature of the window pane, three or also more incisions are necessary for this purpose. Apart from the enormous time expenditure, experience has shown that many customers are unsuccessful in this endeavor.

In the case of the sunshading film cuttings obtainable in specialty stores the side windows are being offered in two or even three parts and, moreover, correspond not at all to a precise cutting. For the rear window panes are available individual wider film webs which overlap by approximately 1 cm at the heating wires. In this case also, these cuttings of the film are by no means exact. In each case, a cumbersome reworking and finishing of the sunshading film is required.

The elimination of the folds on the rear window pane can also be attained thereby that the overlapping film webs are placed in position in a process similar to carpet laying. In this method, when cutting along the heating wires the danger of cutting through them exists. After a relatively short time, in the case of the side window panes as well as also the rear window pane, a bright gap develops at the cut sites, since each film is subject to a specific shrinking process.

Consequently, this complicated and time-intensive method of placing sunshading film is also not an ideal solution.

### DESCRIPTION OF THE INVENTION

It is an object of the present Invention to provide a sunshading film as a sellable and ready-to-use item which is designed to fit with a particular automobile model and can easily and conveniently be applied to at least one window pane of said automobile model even by an unskilled person. More particularly, it is an object of the present Invention to provide a pre-shaped sunshade film that can be applied and adhered in a simple and easy manner onto a three-dimensionally curved or arched window pane, such as a rear window pane, of an automobile model to which it has been designed to fit.

It is a further object of the present Invention to provide a method for producing a sunshading film that is pre-shaped to fit with a three-dimensionally curved window pane of a particular automobile model.

According to one aspect of the Invention, there is provided a sunshading film rolled up and packed as a sales item, the film being a cutting having a non-rectangular outline corresponding to the outline of a window of a specific type of motor vehicle. More particularly, the film is permanently pre-shaped with a non-flat, three-dimensionally shape corresponding to the three-dimensionally curvature of a window pane of a specific type of motor vehicle.

According to another aspect of the Invention, there is provided a method for producing a sunshading film, suitable for adhering onto a three-dimensionally curved window pane of a motor vehicle, comprising the steps of:
- providing a flexible sunshading film material,
- cutting a piece of film in accordance with the periphery shape of a window pane of a particular motor vehicle model;
- placing said cut piece of film onto a shaping support having a three-dimensional curvature corresponding to that of said window pane;
- permanently shaping said film to conform with said three-dimensional curvature by locally applying heat onto said film;
- cooling said shaped film and removing it from said shaping support;
- rolling said film to form a roll and packaging said roll into a container to obtain a sales unit.

In the accompanying drawings, constituting a part hereof, and in which like reference characters indicate like parts,

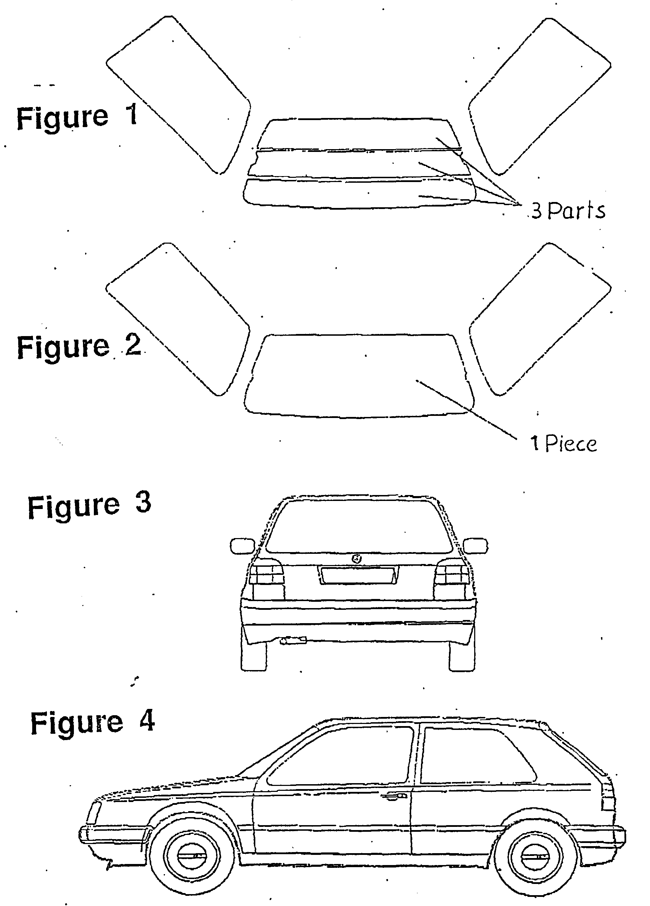

- Figure 1: shows the sunshading film cuttings in which the rear window comprises several parts which are cut exactly and one-hundred percent to fit the size;
- Figure 2: the sunshading film cuttings which, in one piece, permanently maintain the shape of the window pane (arching and curvature) through thermal pretreatment;

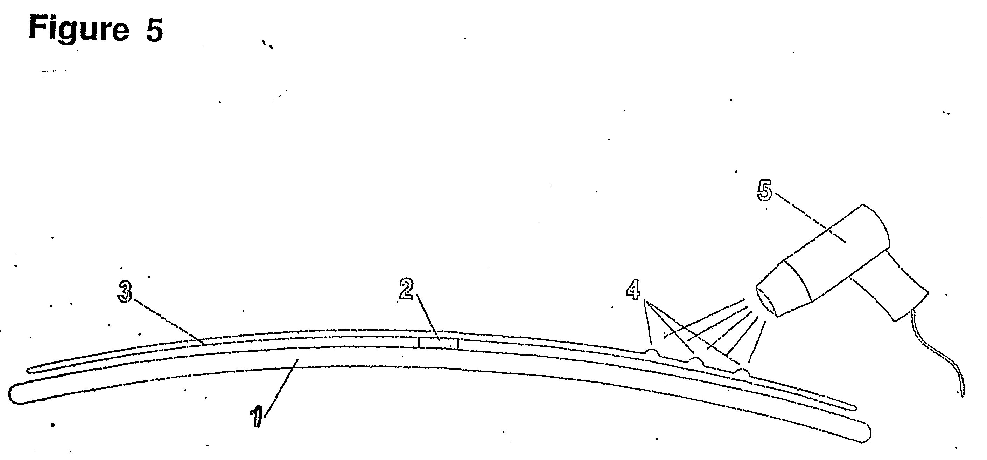

- Figures 3 and 4: the associated type of motor vehicle (in the example: Golf III);
- Figure 5: scheme of the device for the thermal treatment of the sunshading film.

According to a first embodiment sunshading films for all types of motor vehicle are cut precisely to fit according to parameters worked into a PC.

For this purpose all commercially available sunshading films can be used. Preferably, a UV-stable polyester film, colored throughout, with a precious metal coating and a scratch resistant coating can be used.

All sunshading film cuttings pan be placed in position without problems without needing to be trimmed with a cutter blade. All side window cuttings comprise one piece. The parts of the rear window pane, cut precisely to fit the shape, are placed so that they overlap each other by 1 mm. This results in the optical impression, only visible from the inside, of the presence of a further heating wire. From the outside the minimal overlap (1 mm) is virtually invisible.

In the second embodiment, the rear window cutting even comprises only one part. All side window cuttings also comprise one part. After the corresponding special treatment which will be described in detail in the following, it is possible for the first time to place the film on the rear window as one part, free of folds and bubbles, rapidly and in a simple manner.

The sequence of the operating steps (embodiment example) necessary for this purpose are:
1. Cutting the film precisely to fit according to parameters worked into a PC.
2. Lightly heating (from below, to approximately 35°C to 48°C) a three-dimensionally curved rear window pane 1 or a shaping support (metal template) shaped to fit the curvature of the rear window pane.
3. Sprinkling rear window pane (1) or template with powder and placing a moisture dot (2) (H₂O) in the center,
4. Placing perfectly cut film (3) onto the pane or template. The moisture clot (2) affixes the center of the film on the window pane (1) or template (1) only a small quantity of moisture (H₂O) should be applied. In the presence of too much water, film (3) adheres too strongly and thus prevented from assuming the corresponding alignment during the thermal action. Through the sprinkled-on powder (for example baby powder is highly suitable), the adhesion of the film (3) is prevented outside the moisture dot. During the thermal option, the unhindered alignment of the film (3) is thus ensured.
5. The path and pattern of the folds (4) are recognizable after the rear window cutting (3) has been placed in position.
6. Treating folds (4) with blow-drier (5) (approximately 600 to 1500 watts). It is recommended to distribute as much as possible before the working process the folds (4) uniformly by hand toward the edge of the window pane. In addition, it must be ensured that the film (3) is in contact on both ends of the rear window pane (1) without tension. Thus, no formation of folds should occur on either side. Starting at a relatively large distance of the blow-drier (5) from the film (3) (approximately 30 cm), the hot air stream should be directed onto the folds (4) at an angle of approximately 15 to 45°. In this way, a gradual heating is achieved which, under the constant monitoring of the behavior of the film (3) in the region of the folds (4), is increased by varying the distance of the blow-drier. It is important that the hot air stream in each instance is directed toward the outside, i.e. toward the margin of the window pane. The heating from below and the hot air stream (heating from above) at approximately 80°C to 140°C together act onto the molecular structure of the film (3) in the region of the folds (4). Shrinkage or contraction of the fold (4) is the result. In this way, each fold (4) is shrunk away. As a result is obtained a piece of film permanently fitted to the arching of the window pane. This process has no effect on the quality of the film.
7. Removing, rolling-up, and packaging (the film) after cooling.

Although only a limited number of specific embodiments of the present Invention have been expressly disclosed, it is, nonetheless, to be broadly construed, and not to be limited except by the character of the claims appended hereto.

## Claims

1. Sunshading film for adhering onto a window pane of a motor vehicle, comprising a flexible film material which can be rolled up, said film having the shape of a cutting with an outline differing from the shape of a rectangle, which corresponds to the outline of a window of a motor vehicle of a specific type of motor vehicle.

2. Sunshading film as claimed in Claim 1 comprising two or more cutting parts which correspond, adhered with abutment or with overlap, to the outline of the window pane.

3. Sunshading film as claim in Claim 1 comprising a film material which is dimensionally stable with respect to its plane and that it has an arched, permanent shaping generated in the heated state through local stretching or shrinking and differing from the planar flat shape, which shaping corresponds to the arching of a window pane of a specific motor vehicle model.

4. Sunshading film as claimed in Claim 1 which is packaged in the rolled-up state ready to be sold commercially and ready to be used.

5. A method for producing a sunshading film suitable for adhering onto a three-dimensionally curved window pane of a motor vehicle, comprising the steps of:
providing a flexible sunshading film material;
cutting a piece of film in accordance with the periphery shape of a window pane of a particular motor vehicle model;
placing said cut piece of film onto a shaping support having a three-dimensional curvature corresponding to that of said window pane;
permanently shaping said film to conform with said three-dimensional curvature by applying heat onto said film;
cooling said shaped film and removing it from said shaping support;
rolling said film to form a roll and packaging said roll into a container to obtain a sales unit.

6. A method as claimed in claim 5 wherein said shaping support is a specimen of a window pane of said particular automobile model.

7. A method as claimed in Claim 5 wherein said step of applying heat comprises directing a hot air stream onto said film.

8. A method as claimed in Claim 7 wherein said hot air stream is directed at an angle to said film and in a general direction from the center to the periphery of said film.

9. A method as claimed in Claim 5 further comprising the step of applying an adhesion-increasing agent, such as water, between said shaping support and said film locally at least in the center of said film.

10. A method as claimed in Claim 5 comprising the step of producing a plurality of sunshade films trimmed and shaped in conformity with the rear window pane and at least two side window panes of a particular automobile model, and rolling said plurality of sunshading films together to a roll and packaging said roll to obtain a sales unit.
